# EUROPEAN PATENT APPLICATION

(11) **EP 2 404 953 A1**
(43) Date of publication of application: **11.01.2012**
(21) Application number: 10168926.3
(22) Date of filing: 08.07.2010
(51) Int. Cl.: C08J 3/11, C09J 127/06, C09J 155/02, C08J 5/12, B29C 65/48

(54) **Solvent based glue composition**

(71) Applicant: Nordcoll A/S, 3490 Kvistgaard (DK)
(72) Inventor: Jensen, Mikael, 3400, Hillerød (DK)
(74) Representative: Bender, Mikkel

(57) **Abstract**

The present invention relates to glues comprising a solution of at least one water-insoluble synthetic organic polymer selected from the group consisting of PVC and ABS, said glue comprising the solvent N-Acetylmorpholine. The invention further relates to use of the glue for joining surfaces of articles made from material comprising water-insoluble synthetic organic polymers selected from the group comprising PVC and ABS and to use of N-Acetylmorpholine in the manufacturing of glue comprising at least one water-insoluble synthetic organic polymer selected from the group consisting of PVC and ABS.

## Description

### Technical Field

The present invention relates to novel compositions of PVC and ABS glues and, particularly, it relates to the solvents used herein.

The invention further relates to the use of N-Acetylmorpholine in the manufacturing of a glue.

The invention further relates to a method for gluing surfaces of articles made from material comprising water-insoluble synthetic organic polymers.

### Background

For many years, the use of polymer materials in e.g. the construction and plumbing industries has resulted in the necessity of joining, by gluing, prefabricated or fitted articles e.g. made from PVC or ABS. Glues or adhesives are widely used for joining plastic piping such as water pipes and other moulded plastic articles such as roof gutters, roof-ings and window frames. Such glues for joining PVC or ABS articles are commonly made from a solvent for PVC or ABS and a minor amount of PVC or ABS dissolved in the solvent.

Many of the prior art solvents used in these types of glues have relatively low boiling point and/or flash point and are hazardous to the health when inhaled and, in varying degrees, by skin contact. Thus, official safety demands dictated by the fire hazards involved and by the occupational risk as well as general health risk are so strict that the compliance to such demands renders the use of such solvents costly and troublesome. EP011250 discloses a solution to this problem by disclosing solvents that were safer than the prior art solvents. Particularly, the solvent N-methyl-2-pyrrolidone was found to have low toxicity and provided desirable properties to the glue.

Recently, however, EU legislation (Commissions Directive 2009/2/EC on the approximation of the laws, regulations and administrative provisions relating to the classification, packaging and labelling of dangerous substances) has classified N-methyl-2-pyrrolidone as a toxic solvent when present in amounts above 5 % of total weight, and thus, as an undesired chemical, particularly for occupational use. In some of the prior art glues, N-methyl-2-pyrrolidone (NMP) represented approximately 80% of total content of the glues.

Thus, there is a need in the art for new PVC- and ABS glues that are less toxic than prior art glues comprising more than 5% N-methyl-2-pyrrolidone (NMP) as solvent (defined herein as non-toxic glues), as well as methods for gluing articles made from material comprising water-insoluble synthetic organic polymers such as e.g. PVC or ABS.

Thus, one aim of the invention is to provide methods and glues that are safer to work with and preferably at least equal in performance values compared to prior art glues comprising more than 5 % by weight of N-methyl-2-pyrrolidone as solvent.

### Disclosure of the Invention

In the experimental development leading to the present invention, the inventor found that the solvent that was suggested by the suppliers of solvents as the best choice for replacing N-methyl-2-pyrrolidone (NMP), namely 1-ethyl-2-pyrrolindone (NEP) did not work as desired. Particularly, glue made solely on the basis of this solvent did not meet the requirements in shear tensile tests as well as in pressure tests.

Surprisingly, the inventor of the present invention found that the problem was solved by using the solvent N-Acetylmorpholine. Use of this solvent resulted in a glue which met the official safety demands as well as a glue with the desired performance values in tests.

Accordingly, the invention relates to a glue comprising a solution of at least one water-insoluble synthetic organic polymer selected from the group consisting of PVC and ABS, said glue comprising the solvent N-Acetylmorpholine.

Further, the invention relates to the use of N-Acetylmorpholine in the manufacturing of glues comprising at least one water-insoluble synthetic organic polymer selected from the group consisting of PVC and ABS.

Further, the invention relates to a method for gluing surfaces of articles made from material comprising water-insoluble synthetic organic polymers selected from the group comprising PVC and ABS.

### Definitions:

In the context of the present invention, the term "glue" includes adhesives, cements, pastes and the like that are capable of joining or forming a bond between two surfaces.

In the context of the present invention, the term "solvent" is a substance capable of dissolving another substance.

In the context of the present invention, the term "Toxic" is used for compounds that are labelled in the hazard category "Tx" or "T" or "severe acute toxicity" or "danger" in agreement with the classification according to The Commissions Directive 2009/2/EC of 15 January 2009 on the approximation of the laws, regulations and administrative provisions relating to the classification, packaging and labelling of dangerous substances.

In the context of the present invention, the term "Non-toxic" is used for compounds, solvents and/or glues that are not labelled as "Toxic" according to the above definition. Accordingly, "Non-toxic" may refer to compounds, solvents and/or glues that are labelled in the hazard categories "Xn" i.e. as "acute toxicity - harmful" or "warning" or "hazardous" or any other category other than "Toxic" as defined above.

In the context of the present invention, the term "Hazardous" is used in accordance with EU legislation (The Commissions Directive 2009/2/EC of 15 January 2009).

N-Acetylmorpholine is sometimes referred to as 1-(4-morpholinyl)-Ethanone or NAM and has the following CAS number: CAS 1696-20-4.

1-ethyl-2-pyrrolindone (NEP) has the following CAS number: CAS 2687-91-4.

### Detailed description of the Invention

In view of the fact that glues for joining water-insoluble synthetic organic polymers containing above 5% of the first-choice solvent, NMP, are now classified as toxic, the inventor of the present invention aimed at providing non-toxic glues for joining articles of water-insoluble synthetic organic polymers such as e.g. PVC or ABS with at least equal performance values compared to the prior art glue containing NMP as solvent.

The skilled person would consider the solvent 1-ethyl-2-pyrrolindone (NEP) as an obvious choice for replacing NMP; however, the inventor of the present invention found that NEP as sole solvent did not solve the problem, as the resulting glue did not have the required strength.

Surprisingly, the inventor found that the problem was solved by using N-Acetylmorpholine as solvent, e.g. in combination with NEP and/or NMP. N-Acetylmorpholine has not previously been mentioned as a suitable solvent for use in glues comprising at least one water-insoluble synthetic organic polymer, and particularly, it has not been suggested as solvent in PVC or ABS glues.

Accordingly, in one embodiment the present invention relates to glues comprising a solution of at least one water-insoluble synthetic organic polymer selected from the group consisting of PVC and ABS, wherein the glue comprises the solvent N-Acetylmorpholine. Hereby glues are obtained which are less toxic and thus less hazardous than the prior art glues. Further, the glues comprising water-insoluble synthetic organic polymers and comprising the solvent N-Acetylmorpholine has surprisingly good gluing properties compared to prior art glues. It has been found that glues according to the present invention are stronger than the prior art glues based solely on NMP as solvent. However, as N-Acetylmorpholine is not as efficient in dissolving PVC and because N-Acetylmorpholine is more expensive than e.g. NMP and NEP, N-Acetylmorpholine may be combined with one or more other solvents that are more efficient at dissolving the PVC or ABS. Such glues according to the present invention, comprising N-Acetylmorpholine as solvent set sufficiently fast and the strength of the glues is superior to the prior art glue based solely on NMP as solvent.

The glues according to the invention typically comprise N-Acetylmorpholine in combination with one or more solvents selected from the group comprising 1-ethyl-2-pyrrolindone and N-methyl-2-pyrrolidone. In one embodiment N-Acetylmorpholine is combined with NEP. In another embodiment N-Acetylmorpholine constitutes about 4.5% by weight and NEP constitute about 76% by weight of the total content of the glue. Hereby glue is obtained which reveals excellent gluing properties in tensile shear tests as described further in the examples.

It is important that the glues set sufficiently fast for the glues to possess high strength properties relatively fast. The glues of the present invention obtain strengths of about 2 N/mm² within the first hour after applying the glue to the articles to be joined. Hereby glues are obtained that allows rapid and strong development of joints between desired articles. It is an advantage that the glues of the present invention set fast, thus minimizing the dissolution of the PVC substrate, i.e. the surfaces to be joined.

A further advantage of the glues setting relatively fast is that the joint articles can be handled even though the joint has not set hard. When the joined articles are water pipes this means that water pressure can be applied within few hours after gluing. This is an advantage e.g. because it minimizes wasted time spent on waiting for articles to be joined properly.

Further, the glues preferably obtain strengths of about 4 N/mm² within 24 hours of application and strengths of approximately 7 N/mm² within 7 days of application.

In other embodiments of the invention, N-Acetylmorpholine is combined with NEP and NMP. Hereby glue is obtained wherein the strength after 7 days is higher than glues without NMP as part of the solvents. In one embodiment N-Acetylmorpholine constitutes 4.5%, NEP constitutes 71.5% and NMP constitutes 4.5% by weight of the total content of the glue.

In glues according to the present invention, the solvent N-Acetylmorpholine may constitute between 0.5 and 99.5% of the total content of the glue by weight, such as between 1 and 80%, such as between 2 and 70%, such as between 2 and 60%, such as between 2 and 50%, such as between 2 and up to 40%, such as between 2 and up to 30%, such as between 2 and up to 20%, such as 3%, 4%, 4.5%, 5%, 6%, 7%, 8%, 9%, 10%, 11 %, 12%, 13%, 14%, 15%, 16%, 17%, 18%, 19%, or 20% of the total weight of the glue. Hereby glues are obtained that are less toxic than glues based solely on the prior art solvent, NMP.

Further, glues comprising the solvent N-Acetylmorpholine have revealed surprisingly good strength properties in tests. Specifically it has been found that glues wherein the content of N-Acetylmorpholine is from 4% and up to 20% by weight of the total content of the glue are particularly strong. In these embodiments N-Acetylmorpholine may be combined with the solvent NEP or NEP together with NMP. When the content of NMP does not exceed 5% by weight, these embodiments are non-toxic as defined above. Glues according to the invention, wherein N-Acetylmorpholine is combined with the solvent NEP or NEP/NMP, NEP may constitute between 5 and 90% by weight of the total content of the glue by weight, such as between 10 and 85%, such as between 15 and 80%, such as between 20 and 75%, such as between 30 and 75%, such as between 40 and 73%, such as between 50 and 73%, such as between 60 and 72%, such as between 65 and 71 %, such as 66%, 67%, 68%, 69%, 70% or 70.5% . If NMP is present it constitutes between 0.1 and 5% of the total content of the glue by weight, such as between 0.5 and 5%, such as between 1 and 5%, such as between 2 and 5%, such as between 3 and 5%, such as between 4 and 5%, such as 4.1%, 4.2%, 4.3%, 4.4%, 4.5%, 4.6%, 4.7%, 4.8% or 4.9% by weight of the total content of the glue by weight. When combining N-Acetylmorpholine with other solvents, it is an advantage to combine with solvents that are suited for dissolving the particular water-insoluble synthetic organic polymer used in the glue. This is of particular relevance for those polymers where N-Acetylmorpholine does not solve the polymer sufficiently well in itself. Thus, by combining solvents with different properties glues are obtained, where the advantages of N-Acetylmorpholine, i.e. a stronger glue, is combined with the advantages of the other solvents, which may be e.g. lower cost and better dissolution power so that the polymers are dissolved sufficiently fast for the manufacturing of the glue to be commercially practical.

In glues according to the present invention, the total concentration of the solvents is between 50-99.5% by weight of the total content of the glue, such as between 60-90%, such as between 70-90%, such as between 75-85%, such as between 78-83% by weight, such as 79%, 80%, 81% or 82% by weight. In one particular embodiment N-Acetylmorpholine is combined with NEP to a total concentration of 80.5% by weight of total glue content.

Further, typically the glues of the present invention comprise water-insoluble synthetic organic polymers in the concentration of between 0.5-50% by weight of the total content of the glue, such as between 5-40%, such as between 5-30%, such as between 5-25%, such as between 10-25% by weight, such as 11%, 12%, 13%, 14%, 15%, 16%, 17%, 18%,19%, 20%, 21%, 22%, 23%, 24% or 25% by weight. The polymers used in the present invention may be homopolymers or copolymers.

As a general rule, the polymer or polymers in a glue is/are preferably identical or substantially identical to the polymer or polymers which are to be joined by means of the glue in question. In other words, the polymer in a glue for gluing PVC is preferably PVC, the polymer in a glue for gluing ABS is preferably ABS, etc. However, it has also been found that two different polymer materials may be glued by means of a glue according to the invention which comprises only one of the polymers. For use in the various applications the viscosity of the glue may be adjusted within a wide range by increasing or decreasing the concentration of the polymer or polymers in the glue. The polymer or polymers are preferably present in the glues according to the invention in a concentration between 0.5 and 50% by weight, or preferably a concentration between 2 and 40% by weight, usually between 5 and 40% such as between 5 and 30% by weight. For most practical applications, a suitable glue will contain the polymer or polymers in a concentration of between 5 and 25%, in particular between 10 and 25%, such as about 11%, 12%, 13%, 14%, 15%, 16%, 17%, 18%, 19%, 20%, 21%, 22%, 23%, 24% or 25% by weight. Thus, by regulating the concentration of the polymer in the glue composition, the viscosity of the glue can be changed. Typically, higher viscosity, i.e. glues with high content of PVC or ABS is used when the surfaces to be joined are far spaced thus necessitating a wide/thick glue line and a thus a large amount of glue with high strength. This may be the case when joining pipes with inaccurate tolerances or when joining large pipes, where it is difficult to obtain good tolerances.

The viscosity of the glue can further be controlled by other means than adjusting polymer concentration. Accordingly, the glues of the invention may further comprise a thixotropic agent. This is advantageous in order to avoid dripping of the glue without resorting to an otherwise undesired high concentration of the polymer or polymers. The thixotropic agent may e.g. be silicon dioxide. The thixotropic agent may be incorporated in any suitable amounts such as from about 0.1 to about 5 percent by weight, such as between 3 and 4% by weight.

The glues as described above may further comprise a stabilizer, such as e.g. a Ca-Zn stabilizer.

The invention further relates to the use of glues as described above for gluing surfaces of articles made from material comprising water-insoluble synthetic organic polymers selected from the group comprising PVC and ABS. The PVC glues may be used as the prior art glues based solely on the toxic solvent NMP for gluing all kinds of ABS or PVC surfaces. Thus, the non-toxic PVC glues of the present invention may be used for gluing hard PVC onto hard PVC, such as water pipes and fittings for these, as well as for soft or softened PVC to hard PVC. This permits e.g. the easy gluing of soft PVC hoses to hard PVC fittings in connection with the installation of e.g. swimming pools, or in connection with the construction of laboratory apparatus (gluing of soft PVC hoses to hard PVC tubes, in dishwashers, washing machines, etc.). A further possibility is the gluing or repair of soft PVC articles, where a glue according to the invention may be constructed with a sufficient body and viscosity to fill cracks or fissures and other irregularities and join them to attain the original dense structure, with retention of the general soft character of the original article. This is ascribable to the characteristics of the glue of the invention to the effect that it does not interfere with or extract plasticizer from the PVC. Further, the glues according to the present invention may be used for gluing PVC or ABS onto preconditioned metal.

Further, the invention relates to the use of N-Acetylmorpholine in the manufacturing of a glue comprising at least one water-insoluble synthetic organic polymer selected from the group consisting of PVC and ABS.

In addition, the invention relates to use of N-Acetylmorpholine in the manufacturing of a glue comprising at least one water-insoluble synthetic organic polymer selected from the group consisting of PVC and ABS, wherein the glue further comprises one or more solvents selected from the group comprising 1-ethyl-2-pyrrolindone and/or N-methyl-2-pyrrolidone.

Further, the invention relates to the uses described above, wherein N-Acetylmorpholine constitutes between 0.5 and 99.5% of the total content of the glue by weight, such as between 1 and 80%, such as between 2 and 70%, such as between 2 and 60%, such as between 2 and 50%, such as between 2 and up to 40%, such as between 2 and 30%, such as between 2 and up to 20%, such as 3%, 4%, 4.5%, 5%, 6%, 7%, 8%, 9%, 10%, 11 %, 12%, 13%, 14%, 15%, 16%, 17%, 18%, 19%, or 20% of the total weight of the glue.

The invention further relates to a method for gluing surfaces of articles made from material comprising water-insoluble synthetic organic polymers selected from the group comprising PVC and ABS, said method comprising applying a glue according to the present invention on at least one of the surfaces to be joined, joining the surfaces and allowing the joint to develop.

The invention further relates to a method for producing a glue comprising at least one water-insoluble synthetic organic polymer selected from the group consisting of PVC and ABS, said method comprising a step of adding a solvent solution to the composition, said solvent solution comprising N-Acetylmorpholine.

### Examples

### Preparation of glue - industrial scale

1) 1236.5 kg of solvent(s) is poured into a mixing vessel.
2) Add 1.99 kg stabilizer to 10 kg solvent and add to the vessel.
3) Stir vigorously for 2 minutes.
4) Slowly add 50 kg Orisil 200 (Thixotropic agent, Silicon dioxide).
5) Stir until a homogenous solution is obtained (10-15 min).
6) Add 250 kg PVC (Vinnolit S3368 D) and mix vigorously for 2 minutes.
7) Mix slowly for 1.5 to 2 hours and turn off.
8) The next 3 days mix for 1.5 to 2 hours and turn off.
During the whole procedure, the temperature may not exceed 28-30°C.
When all PVC is dissolved, a sample is collected for quality control. If the glue is too thick, more solvent is added (0.5-50kg). If the glue is too thin, more of thixotropic agent is added (0.5-5kg).
Finally, after approved quality control, the glue is collected into storage tanks.

### Tensile shear tests

Different compositions of the glues according to the present invention were tested in tensile shear test and compared to the prior art glue PeViCol, which is based solely in NMP as solvent. Ingredients other than solvent are equal, cf. table 1. The glue was prepared according to the procedure described above, however, in lab scale to a total of 300 gr.

**Table 1**

| **Composition/ Ingredients (% by weight of total composition)** | **PeViCol** | **1** | **2** | **3** | **4** | **5** | **6** |
|---|---|---|---|---|---|---|---|
| **N-Metyl-Pyrrolidon (NMP)** | 80.498 | 0 | 4.500 | 4.5 | 0 | 0 | 0 |
| **N-Ethyl-Pyrrolidon (NEP)** | 0 | 80.500 | 76.00 | 71.5 | 76.00 | 70.5 | 60.5 |
| **N-Acetylmorpholine** | 0 | 0 | 0 | 4.5 | 4.500 | 10 | 20 |
| **Stabilizer,** Ca-Zn | 0.128 | 0.128 | 0.128 | 0.128 | 0.128 | 0.128 | 0.128 |
| **Thixotropic agent,** Sili-con dioxide | 3.229 | 3.229 | 3.229 | 3.229 | 3.229 | 3.229 | 3.229 |
| **PVC**, e.g. Vinnolit S3368D | 16.145 | 16.145 | 16.145 | 16.145 | 16.145 | 16.145 | 16.145 |
| **Total % control** | 100.00 | 100.00 | 100.00 | 100.00 | 100.00 | 100.00 | 100.00 |

Two 50mm*25mm*6 mm plates of PVC-U (Trovidur EC grey 7011, Rias, Roskilde, DK) were joined with glues according to table 1. This is done by applying the glue to one plate in an area equivalent to 20mm*25mm. Another plate was placed on top of the first and the plates are joined by circular movements to ensure that the glue completely covers the joint. The joined plates were placed in a pre-sized template to ensure that every test resulted in the same 25mm*16mm overlap (joint). The joined surfaces were clamed for one hour and then placed to dry. The first tensile shear test was performed immediately after the specified drying time. Subsequently, tests were performed after 1, 2, 4 and 7 days from the application of the glue. The joint plates for these tests were placed in a room of 25°C, 65% humidity until the tensile shear tests were performed. Tests were performed in a tensile testing machine (LLOYD LR5K PLUDS) applying a tension of 50mm/min. The test results of the compositions of table 1 are shown in table 2. Each result is an average of five tests. The numbers indicate the force in N/mm² that the composition was just able to withstand (i.e. the tensile strength).

**Table 2**

| **Time after application/ Composition** | **1 hour** | **1 day** | **2 days** | **4 days** | **7 days** |
|---|---|---|---|---|---|
| **PeViCol** (80.5% NMP) | 1.14 | 4.3 | 5.94 | 5.73 | 6.9 |
| **1** (80.5% NEP) | 1.28 | 3.8 | 4.51 | 5.97 | 6.82 |
| **2** (4.5%NMP, 76%NEP) | 1.94 | 3.68 | 4.87 | 6.07 | 6.91 |
| **3** (4.5%NMP, 71.5%NEP, 4.5%NAM) | 1.98 | 4.1 | 5.08 | 6 | 7.78 |
| **4** (4.5%NAM, 76%NEP) | 2.13 | 4.47 | 5.33 | 5.85 | 7.57 |
| **5** (10% NAM, 70.5%NEP) | 2.1 | 4.21 | 4.76 | 5.76 | 7.23 |
| **6** (20% NAM, 60.5%NEP) | 2.31 | 4.67 | 5.38 | 6.58 | Not performed |

### Conclusion

From these results it appears that compositions comprising N-Acetylmorpholine as one of two or more solvents have an equal and in several tests points even a higher tensile strength than compositions based solely on NMP and/or NEP. For many applications it is an advantage to obtain a high tensile strength within 1 to 24 hours. Thus, it will be an advantage to use a composition comprising N-Acetylmorpholine compared to the prior art composition, PeViCol, which is solely based on NMP as solvent.

### Pressure tests

Composition 1 and 4 (cf. table 1 and 2) were tested in pressure tests on PVC-U pipes with an outer diameter of 32 mm and an inner diameter of app. 27 mm. A pipe end was glued onto a piece of pipe of app. 10-15 cm and allowed to set for 2, 3, or 24 hours. Hereafter the pipe was arranged to a device that allows the pressure in the pipe to be increased. The pressure was increased to 10 bars after 2 hours, 25 bars after 3 hours, and 30 bars after 24 hours. The test was regarded as passed if the pressure was maintained for one hour.
Composition 1 failed the pressure test, whereas composition 4 passed the test.

## Claims

1. A glue comprising a solution of at least one water-insoluble synthetic organic polymer selected from the group consisting of PVC and ABS, said glue comprising the solvent N-Acetylmorpholine.

2. Glue according to claim 1 further comprising one or more solvents selected from the group comprising 1-ethyl-2-pyrrolindone and N-methyl-2-pyrrolidone.

3. Glue according to claim 1 or 2, wherein N-Acetylmorpholine constitutes between 0.5 and 99.5% of the total content of the glue by weight, such as between 1 and 80%, such as between 2 and 70%, such as between 2 and 60%, such as between 2 and 50%, such as between 2 and up to 40%, such as between 2 and up to 30%, such as between 2 and up 20%, such as 3%, 4%, 4.5%, 5%, 6%, 7%, 8%, 9%, 10%, 11%, 12%, 13%, 14%, 15%, 16%, 17%, 18%, 19%, or 20% of the total weight of the glue.

4. Glue according to any of the above claims, wherein N-methyl-2-pyrrolidone constitutes less than 5% of the total content of the glue by weight.

5. Glue according to any of the previous claims, wherein the total concentration of the solvents is between 50-99.9% by weight of the total content of the glue, such as between 60-90%, such as between 70-90%, such as between 75-85%, such as between 78-83% by weight, such as 79%, 80%, 81 % or 82% by weight.

6. Glue according to any of the previous claims, wherein the concentration of the water-insoluble synthetic organic polymer is between 0.1-50% by weight of the total content of the glue, such as between 5-40%, such as between 5-30%, such as between 5-25%, such as between 10-25% by weight, such as 11 %, 12%, 13%, 14%, 15%, 16%, 17%, 18%, 19%, 20%, 21%, 22%, 23%, 24% or 25% by weight of the total content of the glue.

7. Glue according to any of the previous claims further comprising a thixotropic agent.

8. Glue according to claim 7 further, wherein the thixotropic agent is silicon dioxide.

9. Glue according to any of the previous claims further comprising a stabilizer.

10. Glue according to claim 9, wherein the stabilizer is a Ca-Zn stabilizer.

11. Glue according to any of the previous claims, wherein the water-insoluble synthetic organic polymer is PVC.

12. Use of a glue according to any of the previous claims for joining surfaces of articles made from material comprising water-insoluble synthetic organic polymers selected from the group comprising PVC and ABS.

13. Use of N-Acetylmorpholine in the manufacturing of a glue comprising at least one water-insoluble synthetic organic polymer selected from the group consisting of PVC and ABS.

14. Use according to claim 13, wherein the glue further comprises one or more solvents selected from the group comprising 1-ethyl-2-pyrrolindone and/or N-methyl-2-pyrrolidone.

15. Use according to claim 13 or 14, wherein N-Acetylmorpholine constitute between 0.5 and 99.5% of the total content of the glue by weight, such as between 1 and 80%, such as between 2 and 70%, such as between 2 and 60%, such as between 2 and 50%, such as between 2 and up to 40%, such as between 2 and up to 30%, such as between 2 and up to 20%, such as 3%, 4%, 4.5%, 5%, 6%, 7%, 8%, 9%, 10%, 11%, 12%, 13%, 14%, 15%, 16%, 17%, 18%, 19%, or 20% of the total weight of the glue.
